# EUROPEAN PATENT SPECIFICATION

(11) **EP 4 335 740 B1**
(45) Date of publication and mention of the grant of the patent: **01.07.2026**
(21) Application number: 22194129.7
(22) Date of filing: 06.09.2022
(51) Int. Cl.: G05D 1/224, G05D 1/244, G05D 1/678, G05D 1/697, G05D 105/80, G05D 107/50, G05D 109/30, G05D 111/10, B63G 8/00

(54) **AN UNDERWATER INSPECTION ASSEMBLY, UNMANNED UNDERWATER VEHICLES SUITABLE FOR USE IN THE ASSEMBLY, AND A METHOD OF INSPECTION**
UNTERWASSERPRÜFVORRICHTUNG, UNBEMANNTE UNTERWASSERFAHRZEUGE, GEEIGNET FÜR DIE MONTAGE, UND INSPEKTIONSVERFAHREN
ENSEMBLE D'INSPECTION SOUS-MARIN, VÉHICULES SOUS-MARINS SANS ÉQUIPAGE APPROPRIÉS POUR UNE UTILISATION DANS L'ENSEMBLE, ET PROCÉDÉ D'INSPECTION

(43) Date of publication of application: 13.03.2024
(73) Proprietor: Hydromea SA, 1020 Renens (CH)
(72) Inventor: Schill, Felix, 1020 Renens (CH); Campredon, Paul, 1005 Lausanne (CH); Faraut, Victor, 1006 Lausanne (CH); Aujas, Thomas, 01220 Divonne-les_bains (FR); Camus, Amaury, 1007 Lausanne (CH)
(74) Representative: P&TS SA (AG, Ltd.)

(56) References cited:
- WO-A1-01/21476
- CN-A- 111 874 168
- CN-A- 114 228 961
- JP-A- 2017 001 637
- JP-A- H03 266 794
- US-A1- 2012 167 814
- US-A1- 2020 070 941
- TRSLIC PETAR ET AL: "Vision based autonomous docking for work class ROVs", OCEAN ENGINEERING, PERGAMON, AMSTERDAM, NL, vol. 196, 13 December 2019 (2019-12-13), XP085996055, ISSN: 0029-8018, [retrieved on 20191213], DOI: 10.1016/J.OCEANENG.2019.106840
- JAN FREDRIK STANGELAND: "Subsea Standalone Vehicle System for Snorre B", FACULTY OF SCIENCE AND TECHNOLOGY MASTER'S THESIS, 15 June 2015 (2015-06-15), pages i-vi, 1 - 80, XP055857536, Retrieved from the Internet <URL:https://uis.brage.unit.no/uis-xmlui/bitstream/handle/11250/1238530/Stangeland_JanFredrik.pdf?sequence=1&isAllowed=y> [retrieved on 20211103]

## Description

### Technical domain

The present invention concerns an underwater inspection assembly which comprises a first unmanned underwater vehicle which is tethered; a docking station attached to the first unmanned underwater vehicle; and a second unmanned underwater vehicle which can dock in the docking station; and wherein the first and second unmanned underwater vehicles each comprise a respective optical transceiver so that the first and second unmanned underwater vehicles can optically communicate with one another.

### Related art

Inspection of underwater (i.e. submerged) structures is often inconvenient and costly. When inspecting the inside of a fluid filled tank, it is necessary to drain the tank of its fluid before inspection can be carried out; this leads to long down-time periods which are undesirable and costly. For example, such fluid filled tanks are used in energy generating systems, and inspection of these tanks means that energy generation must be stopped for long periods as the tank is being drained and subsequently inspected. Moreover existing inspection techniques are costly to carry out.

There are some existing inspection assemblies which are designed to operate underwater; these inspection assemblies can be used to inspect underwater (i.e. submerged) structures such as fluid filled tanks, without the need to drain the fluid for inspection. These existing inspection assemblies typically comprise one or more unmanned underwater vehicles which carry one or more underwater cameras; as the unmanned underwater vehicles are driven around the structure their underwater camera capture images which are relayed to the surface for viewing.

For example, some existing inspection assemblies comprise a primary unmanned underwater vehicle and a plurality of secondary unmanned underwater vehicles each of which comprise an underwater camera; each the secondary unmanned underwater vehicles are deployed and relay image data captured by their respective cameras to the primary unmanned underwater vehicle.

However, these existing inspection assemblies are not optimal: Firstly, existing inspection assemblies are not designed to access "hard-to-reach" areas; often the unmanned underwater vehicles are too large to access all parts of a structure.

Even if the unmanned underwater vehicle of an existing inspection assembly is designed to access "hard-to-reach" areas, when in these "hard-to-reach" areas the unmanned underwater vehicle can loose communication connection so images captured cannot be relayed to the surface in real time.

US2012167814 discloses a coupling head, coupled to an autonomous underwater vehicle via a rendezvous head that is connectable to or part of the underwater vehicle. The coupling head has an alignment stabilizing arrangement for stabilizing its alignment and position in the water below the water surface. There is further disclosed a coupling device having a coupling head and having a cable which is detachably connectable, mechanically, electrically and in a signal-connecting manner, to the coupling head, and to a rendezvous device having the rendezvous head. The underwater vehicle has the rendezvous head and/or the rendezvous device, and a coupling system, which comprises at least the coupling and rendezvous heads. There is further disclosed a coupling method and a deployment method of an autonomous underwater vehicle which includes the coupling method.

Publication "Subsea Standalone Vehicle System for Snorre B", Faculty of Science and Technology MASTER'S THESIS, 15 June, XP055857536, discloses a design of an autonomous subsea vehicle intended to operate without tethers or continuous surface support. The system integrates propulsion, battery-based power storage, navigation and control modules into a standalone subsea unit capable of inspection and light intervention tasks at the Snorre B oilfield. Technical aspects addressed include battery sizing and endurance modeling, propulsion efficiency, autonomous navigation strategies, docking and recharging concepts, and communication links to remote operators. The publication also highlights key challenges such as energy management, pressure effects, and reliability of autonomous functions in deepwater environments.

Existing inspection assemblies wherein the communication connection to the unmanned underwater vehicle is a wired connection are inadequate to access "hard-to-reach" areas since the physical wire will restrict movement and the ability of the unmanned underwater vehicle to access "hard-to-reach" areas. The wired connection also has a high risk of getting tangled within complex structures, for example if there are pipes, valves, handrails or ladders present; a tangled cable can often lead to a very costly recovery operation that requires additional equipment, or draining of the structure followed by human access.

Furthermore existing inspection assemblies are difficult to deploy. In particular inspection assemblies which comprise numerous unmanned underwater vehicles, such as those assemblies which comprise a primary unmanned underwater vehicle and a plurality of secondary unmanned underwater vehicles, will require correspondingly numerous launches as each unmanned underwater vehicle will need to be deployed individually. Likewise, each of the numerous unmanned underwater vehicle will need to recovered from the water individually after inspection is completed.

Moreover, once deployed these underwater vehicles must be returned to the surface often for recharging leading to delays in the inspection procedure.

### Short disclosure of the invention

It is an aim of the present invention to obviate, or mitigate, at least some of the disadvantages associated with existing inspection assemblies.

According to the present invention there is provided an underwater inspection assembly having the features recited in independent claim 1.

The underwater inspection assembly of the present invention comprises a docking station which is attached to the first unmanned underwater vehicle (UUV); the at least second unmanned underwater vehicle (UUV) can be docked in the docking station. Advantageously, the at least second UUV can be docked in the docking station for launch, so the first and the at least second UUV to be deployed in a single launch. Furthermore, the at least second UUV can driven to dock in the docking station underwater, thereby allowing the first and the at least second UUV to be simultaneously retrieved from the water.

Furthermore, the tether can be used to lower the first UUV and the at least second UUV simultaneously into the water; and can also be used to pull the first UUV and the at least second UUV simultaneously out of the water for retrieval. The tether will also provide a reliable communication link to the surface, without limiting the possibility for the assembly to inspect "hard-to-reach" areas because the at least second UUVs are untethered.

The optical transceivers on the respective first UUV and the at least second UUV allows for the at least second UUV to optically communicate with the first UUV so that image data captured by camera(s) on the at least second UUVs can also be transmitted via the tether to the surface.

In an embodiment the docking station comprises a female element and the docking means comprises a male element which can selectively cooperate with the female element to dock the docking means in the docking station.

In an embodiment the docking means comprises a shaft member which is attached to the second unmanned underwater vehicle via a rack; and wherein the docking station comprises a channel which can receive at least a portion of the shaft member.

In an embodiment the docking station comprises a mouth portion which defines a receiving channel, and an end portion which has a pocket defined therein, and wherein the channel is a guide channel which extends from the mouth portion to the end portion, and wherein the receiving channel tapers towards the guide channel.

In an embodiment the shaft member comprises an end which has a rounded-cone-shape.

In an embodiment the docking station comprises first and second opposing side panels; wherein the first side panel has an inner surface which has a first channel defined therein, and the second side panel has an inner surface which has a second channel defined therein.

In an embodiment a first mouth portion is defined in the inner surface of the first side panel, wherein the first mouth potion comprises a channel which tapers from an edge of the first side panel towards the first channel; and wherein a second mouth portion is defined in the inner surface of the second side panel, wherein the second mouth potion comprises a channel which tapers from an edge of the second side panel towards the second channel.

In an embodiment the docking means comprises a first wing member and a second wing member, wherein the dimensions of the first wing member are such that the first wing member can slide along the first channel of the first side panel, and the dimensions of the second wing member are such that the second wing member can slide along the second channel of the second side panel.

In an embodiment the second optical transceiver is configured to transmit image data captured by the at least second camera, in the form of an optical signal, to the first optical transceiver.

According to the invention a second end of the tether is connected to a terminal, and the tether comprises a communication line over which image data captured by the at least first camera can be transmitted to the terminal.

In an embodiment the first unmanned underwater vehicle and the second unmanned underwater vehicle are the same type of unmanned underwater vehicle.

In an embodiment the tether is mechanically attached to the first unmanned underwater vehicle via an attachment means; and wherein the attachment means and tether are configured so that the tether can be used bear the combined weight of the first unmanned underwater vehicle, docking station, docking means, and at least a second unmanned underwater vehicle, so that the tether can be used to raise or lower the first unmanned underwater vehicle, docking station, docking means, and at least a second unmanned underwater vehicle from/into water.

In an embodiment the assembly comprises, a plurality of docking stations which are attached to the first unmanned underwater vehicle; and a plurality of unmanned underwater vehicles each having a respective docking means, wherein each docking means is configured so that it can be selectively docked in a respective docking station.

In an embodiment the assembly comprises a power source to which a battery of the second unmanned underwater vehicle is electrically connected to allow for recharging of said battery, when the docking means is docked in the docking station.

In an embodiment the tether comprises a power line which supplies power to the first unmanned underwater vehicle, and also supplies power to the power source.

In an embodiment the assembly further comprises one or more visual markers; and wherein second unmanned vehicle comprises at least one camera which is operably connected to a processor so that the processor can receive images of the visual markers captured by the camera; and wherein the processor is configured to determine the position of the docking means relative to visual markers using the images received from the camera; and wherein the processor is configured to compute, at regular intervals, a misalignment of the docking means relative to the docking station, using said determined position of the docking means relative to the visual markers captured; and wherein the processor is further configured to send commands to the propellers of the second unmanned underwater vehicle to move the second unmanned underwater vehicle to minimise the misalignment.

Finally, there is provided a corresponding method of inspecting a structure having the steps recited in independent claim 13. In an embodiment the step of moving the second unmanned underwater vehicle to a second location comprises, transmitting the optical signals from the first transceiver to the second transceiver which control the movement of the second propeller so that the second unmanned underwater vehicle is moved to the second location.

### Short description of the drawings

Exemplary embodiments of the present invention are disclosed in the description and illustrated by the drawings in which:
Figure 1 provides a perspective view of an underwater inspection assembly, according to an embodiment of the invention, wherein the unmanned underwater vehicles of the assembly are in a docked state;
Figure 2 provides a perspective view of the underwater inspection assembly of Figure 1, wherein the unmanned underwater vehicles of the assembly are in an undocked state;
Figure 3 provides a perspective view of the docking station and the docking means used in the assembly of Figures 1 and 2;
Figure 4 provides a perspective view of an underwater inspection assembly, according to a further embodiment of the invention, wherein the unmanned underwater vehicles of the assembly are in a docked state;
Figure 5 provides a perspective view of the underwater inspection assembly of Figure 5, wherein the unmanned underwater vehicles of the assembly are in an undocked state;
Figures 6a-h illustrate steps involved in a method of inspecting a structure according to an embodiment of the present invention.

### Examples of embodiments of the present invention

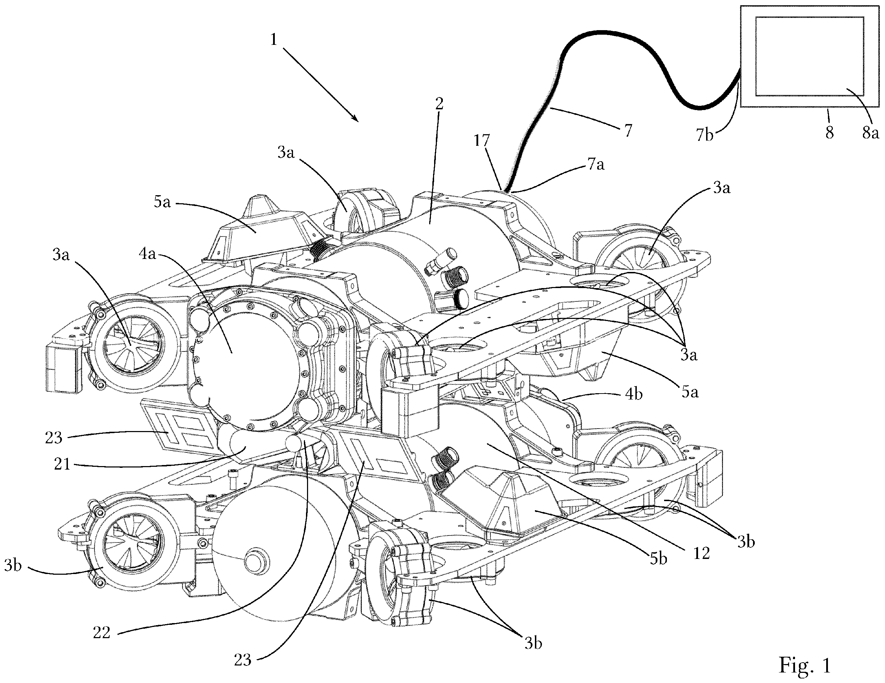

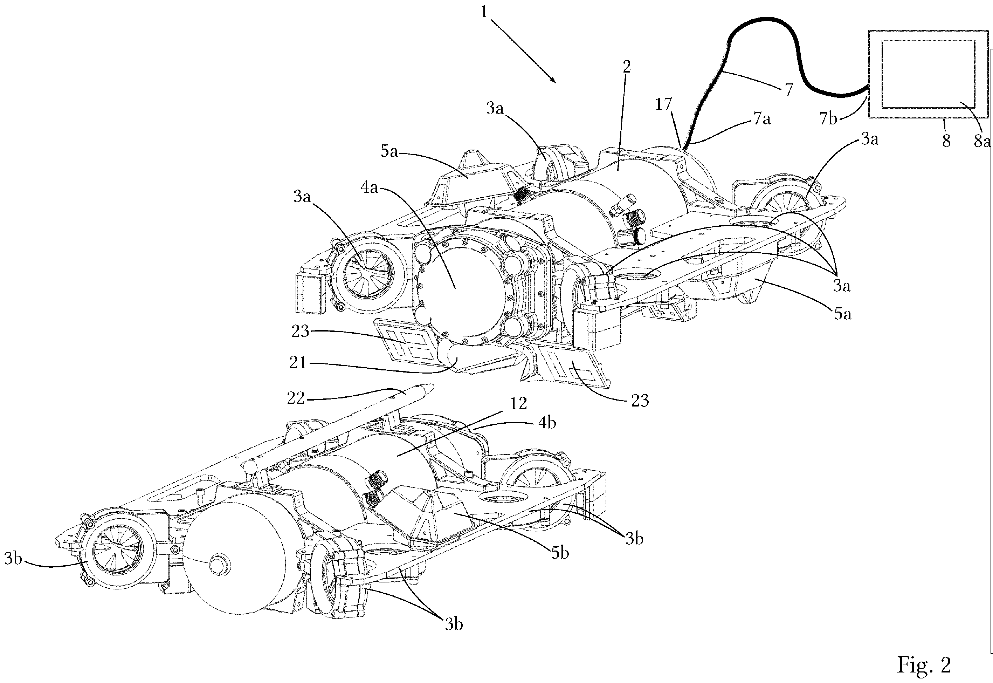

Figures 1 and 2 provide perspective views of an underwater inspection assembly 1 according to an embodiment of the present invention.

The assembly 1 comprises a first unmanned underwater vehicle 2, a second unmanned underwater vehicle 12, a docking station 21 which is attached to the first unmanned underwater vehicle 2, and a docking means 22 which is attached to the second unmanned underwater vehicle 12. The docking station 21 is configured to selectively receive the docking means 22. The docking means 22 can be selectively docked in the docking station 21 so that first unmanned underwater vehicle 2 and second unmanned underwater vehicle 12 are connected to one another (via the docking station 21 and docking means 22) thereby allowing first and second unmanned underwater vehicles to be moved/handled as a single unit. When the docking means 22 is undocked from the docking station 21 the first unmanned underwater vehicle 2 and second unmanned underwater vehicle 12 can move independently of one another.

Figure 1 provides perspective view of the underwater inspection assembly 1 wherein the docking means 22 is docked in the docking station 21; Figure 2 provides a perspective view of the underwater inspection assembly 1 wherein the docking means 22 is undocked from the docking station 21.

In this embodiment of the assembly 1 the first and second unmanned underwater vehicles 2, 12 are of the same type; in other words the first and second unmanned underwater vehicles 2, 12 may share the same design and may have substantially the same features.

The first unmanned underwater vehicle 2 comprises eight propellers 3a which can be used to drive the first unmanned underwater vehicle 2 when underwater, whereas a subset of 4 thrusters is used for controlling linear and rotational motion in the horizontal plane, and another subset of 4 thrusters is used to control vertical motion, and roll and pitch rotational movements. The second unmanned underwater vehicle 12 comprises eight propellers 3b which can be used to drive the second unmanned underwater vehicle 12 when underwater in the same manner. It should be understood that the first unmanned underwater vehicle 2 and/or second unmanned underwater vehicle 2, may comprise any number of propellers 3a,3b.

The first unmanned underwater vehicle 2 further comprise a first camera 4a which can operate underwater. The second unmanned underwater vehicle 12 further comprise a second camera 4b which can operate underwater. It should be understood that the first unmanned underwater vehicle 2 and/or the second unmanned underwater vehicle 12 may each comprise a plurality of cameras which can operate underwater.

The first unmanned underwater vehicle 2 further comprises at least one optical transceiver 5a. In this embodiment first unmanned underwater vehicle 2 comprises an optical transceiver 5a (in this embodiment the first unmanned underwater vehicle 2 comprises two optical transceivers 5a). The second unmanned underwater vehicle 12 further comprises at least one optical transceiver 5b. In this embodiment second unmanned underwater vehicle 12 comprises an optical transceiver 5b (in this embodiment the second unmanned underwater vehicle 12 comprises two optical transceivers 5b). It should be understood that the first unmanned underwater vehicle 2 and/or the second unmanned underwater vehicle 12 may comprise any number of optical transceivers 5a,5b. Importantly the optical transceiver(s) 5a on the first unmanned underwater vehicle 2 can selectively optically communicate with the optical transceiver(s) 5b on the second unmanned underwater vehicle 12, and vice versa.

A tether 7 is attached to the first unmanned underwater vehicle 2. In this embodiment a first end 7a of the tether 7 is attached to the first unmanned underwater vehicle 2, and a second, opposite, end 7b of the tether 7 is attached to a terminal 8 which is located above the surface of the water. The terminal 8 preferably has a display screen 8a.

The first end 7a of the tether 7 is mechanically attached to the first unmanned underwater vehicle 2 via an attachment means 17; the attachment means 17 and tether 7 are configured so that the tether 7 can be used bear the combined weight of the first unmanned underwater vehicle 2, docking station 21, second unmanned underwater vehicle 12, and docking element 22; accordingly, when the docking means 22 is docked in the docking station 21 so that first unmanned underwater vehicle 2 and second unmanned underwater vehicle 12 are attached to one another, the tether 7 can be used to lower the first and second unmanned vehicle, together as a single unit, into the water; likewise the tether 7 can be used to pull the first and second unmanned vehicle, together as a single unit, out of the water. Advantageously the tether comprises an internal reinforcement made from a high tensile strength fibre to avoid mechanical stress to the internal signal conductors that are typically copper wires or fibreoptic glass fibres. Advantageously the tether also provides an attachment loop firmly attached to the outer sheath of the tether in close proximity to the end of the tether that is closest to the vehicle; a high-strength string or rope is attached to the attachment loop on the tether, and attached to a load-bearing attachment point on the vehicle, such that any mechanical stress on the electrical tether connector is minimised. In an embodiment the assembly further comprises a strain relief connection between the cable and the vehicle to reduce stress on the connector.

The tether 7 comprises a first communication line over which image data can be transmitted to the terminal 8 where the image data is displayed on the display screen 8a. For example, image data captured by the camera 4a of the first unmanned underwater vehicle 2 can be transmitted over the first communication line of the tether 7 and displayed on the display screen 8a of the terminal 8.

The tether 7 further comprises a second communication line over which control signals for controlling the eight propellers 3a of the first unmanned underwater vehicle 2. A user can therefore steer the first unmanned underwater vehicle 2 from above the surface of the water surface. Preferably the control signals are generated at the terminal 8 based on input(s) provided by the user.

The tether 7 optionally further comprises a power line over which power can be supplied to the first unmanned underwater vehicle 2.

As can be seen in Figure 2 when the docking means 22 is undocked from the docking station 21 the second unmanned underwater vehicle 12 is mechanically independent of the first unmanned underwater vehicle 2 and of docking station 21. The first and second unmanned underwater vehicles 2, 12 can however communicate with one another via their respective optical transceivers 5a,5b; the optical transceiver(s) 5a on the first unmanned underwater vehicle 2 can selectively optically communicate with the optical transceiver(s) 5b on the second unmanned underwater vehicle 12, and vice versa.

The optical transceiver(s) 5b on the second unmanned underwater vehicle 12 is operatively connected to the second camera 4b, so that the optical transceiver(s) 5b can receive image data which has been captured by the second camera 4b. When the docking means 22 is undocked from the docking station 21, image data captured by the second camera 4b on the second unmanned underwater vehicle 12, can be transmitted in the form of an optical signal from the optical transceiver(s) 5b on the second unmanned underwater vehicle 12 to the optical transceiver(s) 5a on the first unmanned underwater vehicle 2. Upon receipt of the optical signal the image data is transmitted, via the first communication line of the tether 7, to the terminal 8 where the image data is displayed on the display screen 8a. Accordingly in this embodiment image data captured by the first camera 4a of the first unmanned underwater vehicle 2 and also image data captured by the second camera 4b on the second unmanned underwater vehicle 12 can be transmitted over the tether 7 to the terminal 8 where the image data is displayed on the display screen 8a.

It should be understood that image data captured by the second camera 4b on the second unmanned underwater vehicle 12, can be transmitted in an optical signal from the optical transceivers 5b on the second unmanned underwater vehicle 12 to the optical transceivers 5 on the first unmanned underwater vehicle 2, also when the docking means 22 is docked in the docking station 21. Upon receipt of the optical signal the image data may be transmitted, via the first communication line of the tether 7, to the terminal 8 where the image data is displayed on the display screen 8a.

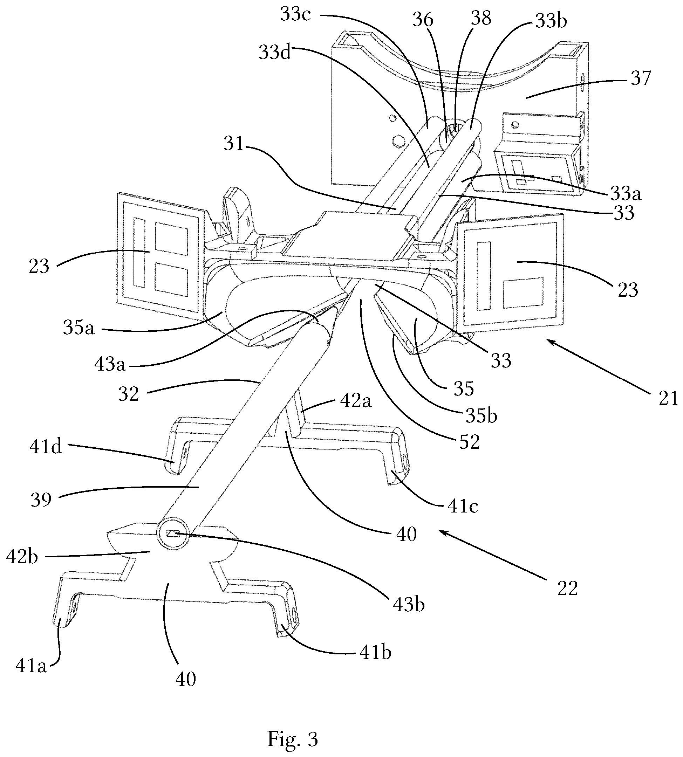

Figure 3 provides a perspective view of the docking station 21 (which, in the assembly 1, is attached to the first unmanned underwater vehicle 2) and the docking means 22 (which, in the assembly 1, is attached to the second unmanned underwater vehicle 12). Referring to Figure 3, it can be seen that the docking station 21 comprises a female element 31 and the docking means 22 comprises a male element 32 which can selectively inserted into the female element 31 to dock the docking means 22 in the docking station 21.

More specifically, the docking station 21 comprises a mouth portion 35, a guide channel 33, and an end portion 37 which has a pocket 38 defined therein. The mouth portion 35 is configured to define a receiving channel 52; the receiving channel 52 tapers from a free end 35a of the mouth portion towards the guide channel 33.

The guide channel 33 extends from the mouth portion 35 to the end portion 37. It should be understood that the guide channel 33 may take any suitable form and may take any suitable implementation. In this example the guide channel 33 is defined by a plurality of rail members 33a-d (in this example four rail members 33a-d) which are arranged symmetrically with respect to one another; each of the rail members 33a-d are arranged parallel to one another; two of the rail members 33a,d are arranged on a first common plane and other two of the members 33c,d are arranged on a second common plane, wherein the first and second planes are parallel. Spacing 36 between the four rail members 33a-d defines the guide channel 33.

The docking means 22 comprises a shaft member 39 and a rack 40. The rack 40 comprises a plurality of leg members 41a-d which attach to the second unmanned underwater vehicle 12. The rack 40 further comprises a first pillar member 42a and a second pillar member 42b each of which attach to the shaft member 39. The first and second pillar members 42a,b maintain the shaft member 39 at a position which is above the second unmanned underwater vehicle 12 when the docking means is attached to the second unmanned underwater vehicle 12 at the leg members 41a-d.

The shaft member 39 has a first end 43a and a second, opposite, end 43b; preferably the first end 43a is tapered; in this example the first end 43a of the shaft member 39 has a rounded-cone-shape. The dimensions of the guide channel 33 are such that the guide channel 33 is long enough to receive the majority of the length of the shaft member 39; and the size of the spacing 36 between the four rail members 33a-d is such that the shaft member 39 will fit snugly within the guide channel 33; most preferably the four rail members 33a-d are arranged so that the spacing 36 corresponds to a cross sectional diameter of the shaft member 39, so that then when the shaft member 39 is positioned in the guide channel 33 each of the rail members 33a-d will abut an outer surface of the shaft member 39.

The mouth portion 35 further has a cut-out 35b through which the first and second pillar member 42a,b of the docking means 22 can move when the docking means 22 is docking in the docking station 21. In one embodiment the shape of the second pillar member 42b corresponds to the shape of a portion of the receiving channel 52 defined in the mouth portion 35 so that when the docking means 22 is docked in the docking station 21 the second pillar member 42b plugs the receiving channel 52.

During operation, in order to dock the docking means 22 in the docking station 21, so that first unmanned underwater vehicle 2 and second unmanned underwater vehicle 12 are connected to one another (via the docking station 21 and docking means 22), the second unmanned underwater vehicle 12 is driven so that the first end 43a of the shaft member 39 is received into the receiving channel 52 of the mouth portion 35 of the docking station 21. The rounded-cone-shape of the first end 43a and the tapered profile of the receiving channel 52 in the mouth portion 35 will facilitate the positioning the first end 43a of the shaft member 39 into the receiving channel 52. Once the first end 43a of the shaft member 39 has been received into the receiving channel 52 the second unmanned underwater vehicle 12 is driven to move the first end 43a of the shaft member 39 into the guide channel 33 of the docking station 21; and move the first end 43a of the shaft member 39 along the guide channel 33 until the majority of the length of the shaft member 39 is located within the guide channel 33 and the first end 43a of the shaft member 39 is received into the pocket 38 of the end portion 37. The rounded-cone-shape of the first end 43a will facilitate the first end 43a of the shaft member 39 moving into the pocket 38 of the end portion 37. The cut out 35b of the mouth portion 35 will make way for the first and second pillar members 42a,b of the rack 40 to pass through as the shaft member 39 is moved into and along the guide channel 33, so that the first and second pillar members 42a,b do not obstruct the movement of the docking means 22 with respect to the docking station 21.

In one embodiment, wherein the second pillar member 42b has a shape corresponding to the shape of a portion of the receiving channel 52 in the mouth portion 35, when the shaft member 39 is located within the guide channel 33 and the first end 43a of the shaft member 39 is received into the pocket 38 of the end portion 37, the second pillar member 42b plugs the receiving channel 52.

Once the majority of the length of the shaft member 39 is located within the guide channel 33 and the first end 43a of the shaft member 39 is received into the pocket 38 of the end portion 37, the docking means 22 is docked in the docking station 21; once docked the pocket 38 and rail members 33a-d of the docking station will restrict the shaft member 39 (and thus the second unmanned underwater vehicle 12 to which the docking means 22 is attached) from moving relative to the docking station 21; for example the rail members 33a-d will prevent the shaft member 39 (and thus the second unmanned underwater vehicle 12) from moving in any direction orthogonal to the guide channel 36, and the pocket 38 will prevent the shaft member 39 from inserting any further into the docking station 21. However, in the preferred embodiment the shaft member will be free to move back out of the guide channel 33, allowing for the docking means 22 to be selectively undocked from the docking station 21 simply by driving the second unmanned underwater vehicle 12 in a direction which retracts the first end 43a of the shaft member 39 from the pocket 38 of the end portion 37 and retracts the shaft member 39 from the guide channel 36.

In an embodiment the assembly 1 may further comprise a locking mechanism. Preferably the locking mechanism is configured to lock in response to the first end 43a of the shaft member 39 being received into the pocket 38 of the end portion 37; when the locking mechanism is locked it will hold the shaft member 39 in a fixed position so that the shaft member 39 is prevented from moving in any direction relative to the docking station 21. Preferably the locking mechanism can be selectively actuated to allow the docking means to be undocked from the docking station.

In one embodiment, when the docking means 22 which is attached to the second unmanned underwater vehicle 12 is docked in the docking station 22 a power source of the second unmanned underwater vehicle 12 will electrically contact an electrical terminal; the second unmanned underwater vehicle 12 can be recharged by power supplied to said electric terminal; the power for recharging may be supplied to the electric terminal via the tether 7.

In another embodiment, an inductive power transfer system is implemented. The first underwater vehicle 2 comprises a first electrical coil and a circuit configured to generate an alternating magnetic field emanating from the first coil that extends outwards towards the docked second underwater vehicle 12, and the second underwater vehicle 12 comprises a second electrical coil, mounted such that the coil is positioned close to the first electrical coil such that it is exposed to the alternating magnetic field, and a circuit configured to rectify the induced voltage from the second coil. This arrangement allows the transfer of electrical power from the first underwater vehicle 2 to the second underwater vehicle 12 in order to recharge the second underwater vehicle 12.

It should be understood that the docking station 21 and the docking means 22 may take any suitable form; the underwater inspection assembly according to the present invention is not limited to having the docking station 21 and the docking means 22 implementation shown in Figure 3.

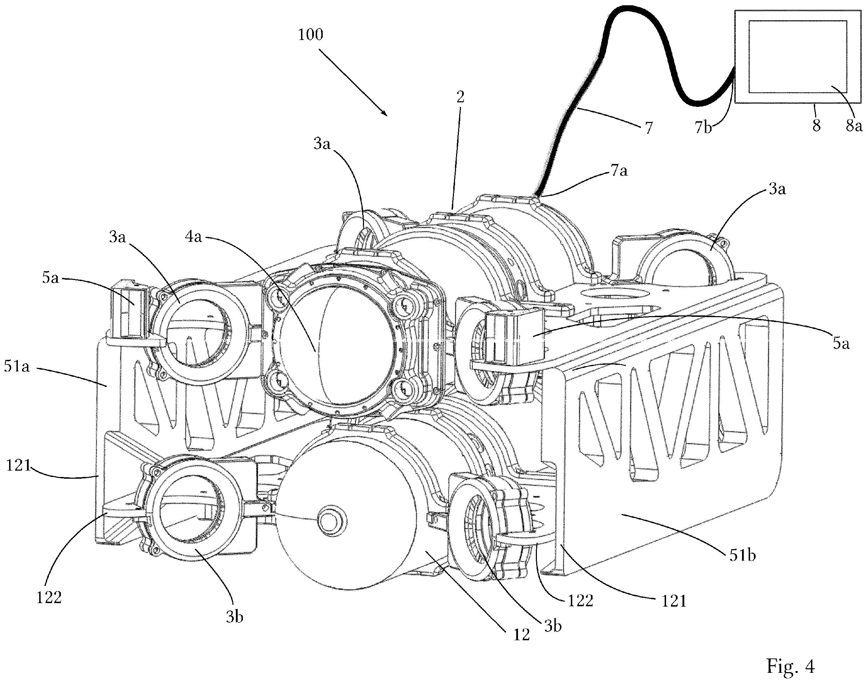

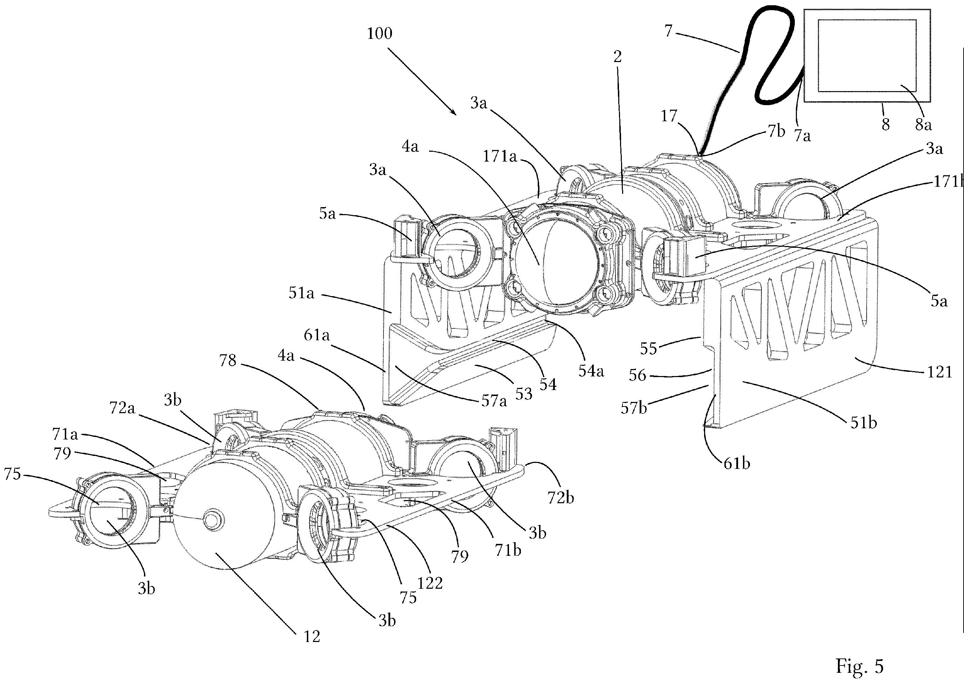

Figures 4 and 5 provide a perspective view of a further embodiment of an underwater inspection assembly 100 according to the present invention. The underwater inspection assembly 100 has many of the same feature as the underwater inspection assembly 1 shown in Figures 1 and 2, and like features are awarded the same reference numbers.

Figure 4 shows the assembly 100 when the second unmanned underwater vehicle 12 is docked in the docking station 121 i.e. when the docking means 122 which is attached to the second unmanned underwater vehicle 12 is received into the docking station 21.

Figure 5 shows the assembly 100 when the second unmanned underwater vehicle 12 is undocked from the docking station 121 i.e. when the docking means 122 which is mounted on a second unmanned underwater vehicle 12 is not received in the docking station 121.

The underwater inspection assembly 100 comprises a docking station 121 and docking means 122, which are different to the docking station 21 and docking means 22 provided in the assembly 1.

Referring to Figures 4 and 5 it can be seen that the docking station 121 comprises first and second opposing side panels 51a, 51b. The first side panel 51a is located at one side of the first unmanned underwater vehicle 2 and the second side panel 51b is located at a second, opposite, side of the first unmanned underwater vehicle 2. The first and second opposing side panels 51a, 51b are arranged parallel to one another. Each of the first and second opposing side panels 51a, 51b comprise a plurality of through-holes 52 defined therein through which water can flow; these through-holes 52 make the first and second opposing side panels 51a, 51b more hydro-dynamic so as to reduce the amount they restrict movement of the first unmanned underwater vehicle 2.

Each of the first and second opposing side panels 51a, 51b have respective inner surfaces which have a respective channel defined therein. The first side panel 51a has an inner surface 53 which has a first channel 54 defined therein, and the second side panel 51b has an inner surface 55 which has a second channel 56 defined therein. The first and second channels 54,56 have the same dimensions and form.

A respective mouth portion is defined in the respective inner surfaces 53,55 of the first and second opposing side panels 51a, 51b. A first mouth portion 57a is defined in the inner surface 53 of the first side panel 51a; the first mouth potion 57a comprises a channel 57a which is defined in the inner surface 53 of the first side panel, which tapers from an edge 61a of the first side panel 51a towards the first channel 54. A second mouth portion 57b is defined in the inner surface 55 of the second side panel 51b; the second mouth potion 57b comprises a channel 57b which is defined in the inner surface 55 of the second side panel 51b, which tapers from an edge 61b of the second side panel 51b towards the second channel 56.

The docking means 122 comprises a first wing member 71a which is located at a first side of the second unmanned underwater vehicle 12; and a second wing member 71b which is located on second, opposite, side of the second unmanned underwater vehicle 12.

The dimensions of the first wing member 71a are such that the first wing member 71a can slide along the first channel 54 of the first side panel 51a; and the dimensions of the first wing member 71a are such that the first wing member 71a can slide along the first channel 54 of the first side panel 51a.

In this embodiment the first and second wing members 71a,71b are each attached to a frame 78 which is secured to the second unmanned underwater vehicle 12.

The first and second wing members 71a,71b may be configured to protect parts of second unmanned underwater vehicle 12 from becoming damaged on impact; for example, in this embodiment the first and second wing members 71a,71b have a first set of cut out portions 75 defined therein which accommodate the propellers 3b of the second unmanned underwater vehicle 12, so that first and second wing members 71a,71b serve as a protective exoskeleton which will prevent the propellers of the second unmanned underwater vehicle 12 from impacting the first and second opposing side panels 51a, 51b as the second unmanned underwater vehicle 12 is manoeuvred to dock the docking means 121 in the docking station 121.

In this embodiment the first and second wing members 71a,71b further have a second set of cut out portions 79 defined therein which make the first and second wing members 71a,71b more hydro-dynamic so that movement of the second unmanned underwater vehicle 12 is less restricted. Unlike the first set of cut out portions 75 which accommodate the propellers an area defined by the each of the cut out portions 79 in the second set is free of any structures so that water can freely pass through the second set of cut out portions 79 unobstructed.

In this embodiment the first unmanned underwater vehicle 2 also comprises first and second wing members 171a,171b which are equivalent to, and have the same features as, the first and second wing members 71a,71b on the second unmanned underwater vehicle 12. The first and second opposing side panels 51a, 51b are attached to respective first and second wing members 171a,171b; specifically the first side panel 51a is attached to the first wing member 171a, and the second side panel 51b is attached to the second wing member 171b. However it should be understood that the first and second wing members 171a,171b are optional features.

During operation, in order to dock the docking means 122 in the docking station 121, the second unmanned underwater vehicle 12 is driven so that the first and second wing members 71a,71b are received respectively into the first and second mouth portions 57a,57b. Specifically the second unmanned underwater vehicle 12 is driven so that the first wing member 71a is received into the first mouth portion 57a, and the second wing member 71b is received into the second mouth portion 57b.

The second unmanned underwater vehicle 12 is driven so that the first and second wing members 71a,71b are moved along the respective first and second mouth portions 57a,57b to the respective first and second channel 54,56. The taper in the respective first and second mouth portions 57a,57b will facilitate the first and second wing members 71a,71b moving into the first and second channel 54,56 as the taper in the first mount portion 57a will funnel the first wing member 71a into the first channel 54 and the taper in the second mount portion 57b will funnel the second wing member 71b into the second channel 56.

The second unmanned underwater vehicle 12 is then driven so that the first and second wing members 71a,71b are moved along the respective first and second channels 54,56. The first wing member 71a will move along the first channel 54 and the second wing member 71b will move along the second channel 56. In this embodiment the length L of each of the first and second wing members 71a,71b is substantially equal to the total length L' of the first channel 54 plus the length of the first mouth portion and it also equal to the length L' of the second channel 56 plus the length of the second mouth portion.

The second unmanned underwater vehicle 12 is driven so that the first and second wing members 71a,71b are moved along the respective first and second channel 54,56 until a leading edge 72a of the first wing member 71a is located at an end 54a of the first channel 54, and a leading edge 72b of the second member 71b is located at an end 56a of the second channel 56. In this position, the second unmanned underwater vehicle 12 will, preferably, be substantially aligned with the first unmanned underwater vehicle 2.

It should be understood that it is not essential that the second unmanned underwater vehicle 12 is then driven until a leading edge 72a of the first wing member 71a is located at an end 54a of the first channel 54, and a leading edge 72b of the second member 71b is located at an end 56a of the second channel 56; advantageous effects of the present invention can still be achieved so along as at least a portion of the first wing member 71a is located in the first channel 54 and at least a portion of the second wing member 71b is located in the second channel 56.

In one embodiment the first side panel 51a has a first stopper element located at the end 54a of the first channel 54; and the second side panel 51b has a second stopper element located at the end 56a of the second channel 56. During use the second unmanned underwater vehicle 12 is then driven so that the first and second wing members 71a,71b are moved along the respective first and second channel 54,56 until the first wing member 71a abuts the first stopper element and the second wing member 71b abuts the second stopper element.

In one embodiment, the second unmanned vehicle 12 comprises at least one camera 4a which is connected to a processor programmed to detect the relative position and orientation of visual markers or visual patterns (e.g. QR code-like partterns/markers) ; the first unmanned vehicle 2 comprises visual markers 23, for example a black and white pattern of multiple rectangles printed on a flat background, that are attached such that they are clearly visible from the camera of the second unmanned vehicle 12 during the docking procedure. The processor computes in regular intervals the relative position and orientation of the visual markers 23, and further the relative position offset and angular misalignment of unmanned underwater vehicle 12 relative to the position and main axis of the docking station. The processor then sends commands to the propellers 3b (thrusters) of unmanned underwater vehicle 12 to move the vehicle in a manner that firstly minimises the angular misalignment secondly minimises the position offset, such that initially the main axis of the docking means becomes co-linear with the main axis of the docking station, and secondly, the docking means is inserted fully into the docking station. The visual markers 23 may be provided on the docking station; preferably located at a position on the docking station where they can be easily seen by the camera on the second unmanned underwater vehicle (such as an outer surface of the docking station); in another embodiment the visual markers 23 may be provided on the first unmanned underwater vehicle.

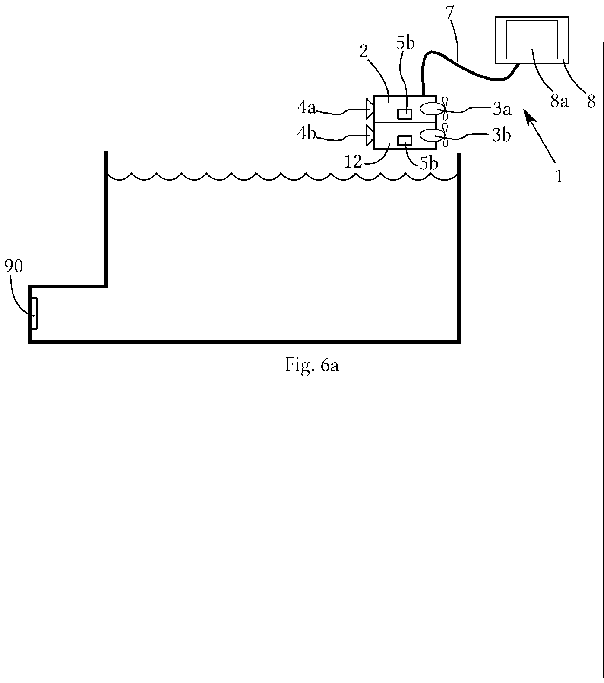

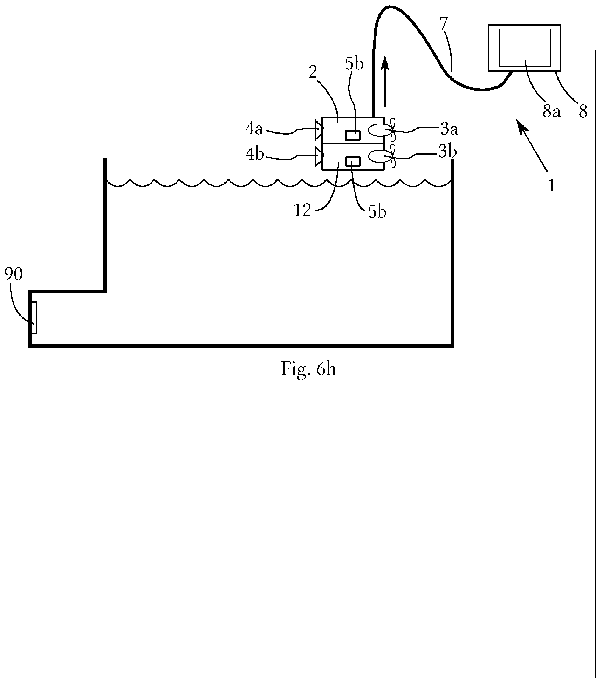

Figures 6a-h illustrate the steps involved in carrying out a method of inspecting a structure 90 which is located underwater, using the assembly 1,100 according to any one of the above-described embodiments.

Referring to Figure 6a the docking means 22,122 is docked in the docking station 21,121,so that first unmanned underwater vehicle 2 and second unmanned underwater vehicle 12 are connected to one another (via the docking station 21 and docking means 22) thereby allowing first and second unmanned underwater vehicles to be handled as a single unit. Using the tether 7 the first and second unmanned underwater vehicles 2,12 are lowered together, as a single unit, into the water.

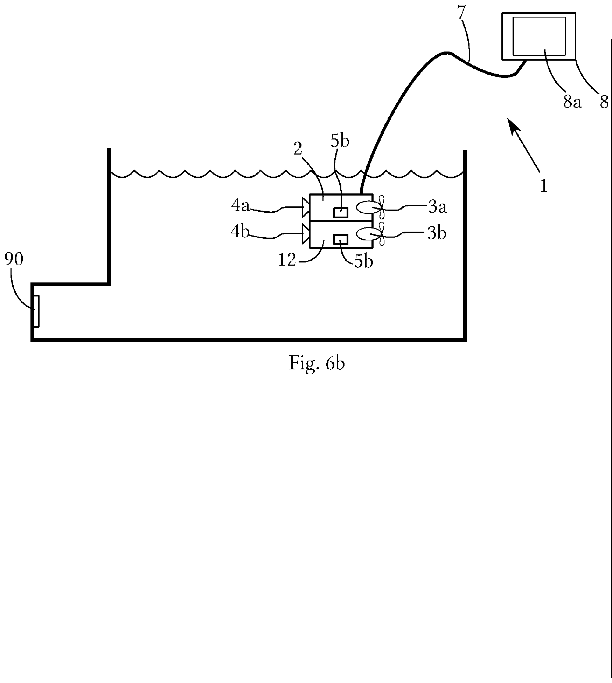

As depicted in Figure 6b, signals which control the movement of the propellers 3a of the first unmanned underwater vehicle 2 are transmitted along the tether 7 so as to drive the first unmanned underwater vehicle and second unmanned underwater vehicle to a first location. In one embodiment only the propellers 3a of the first unmanned underwater vehicle 2 are used to move the first and second unmanned underwater vehicles 2,12 to the first location; in this case the first unmanned underwater vehicle 2 effectively carried the second unmanned underwater vehicle 2 to the first location. In another embodiment the propellers 3a,3b on both the first and second unmanned underwater vehicles 2,12 are operated to drive the first and second unmanned underwater vehicles 2,12 to the first location.

In an embodiment the first camera 4a on the first unmanned underwater vehicle 2 and the second camera 4b on the second unmanned underwater vehicle 12 may each be operated to capture images as the first and second unmanned underwater vehicles 2,12 are being moved to the first location. Images captured by the first and/or second cameras are transmitted, via the tether 7, to the terminal 8 where they are displayed on the display screen 8a. The captured images may be used to determine when the first and second unmanned underwater vehicles 2,12 have reached the first location.

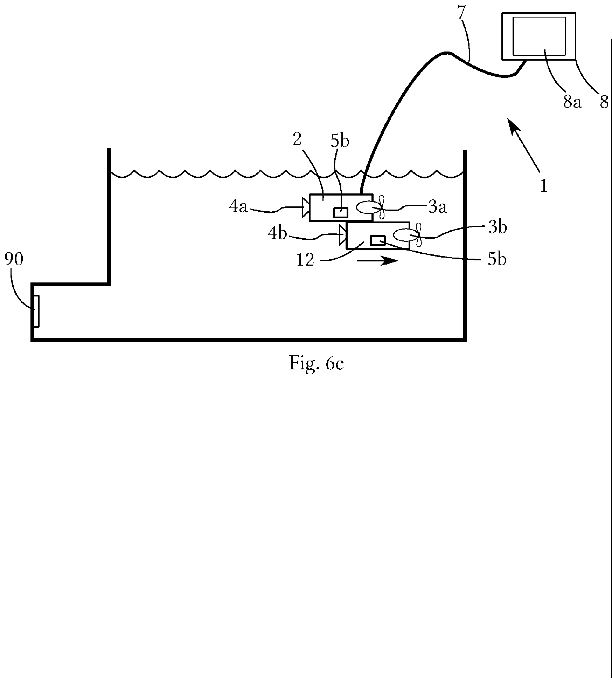

As depicted in Figure 6c, at the first location the propellers 3b of the second unmanned underwater vehicle 12 are operated to undock the docking element 22,122 from the docking station 21, 121. In one embodiment the propellers 3b of the second unmanned underwater vehicle 12 are operated to drive the second unmanned underwater vehicle 12 in one direction, and the propellers 3b of the first unmanned underwater vehicle 2 are operated to drive the first unmanned underwater vehicle 2 in a second, opposite, direction, so that the docking element 22,122 undocks from the docking station 21,121. Once the docking element 22, 122 undocks from the docking station 21,121 the second unmanned underwater vehicle 12 is free to move independently of the first unmanned underwater vehicle 2.

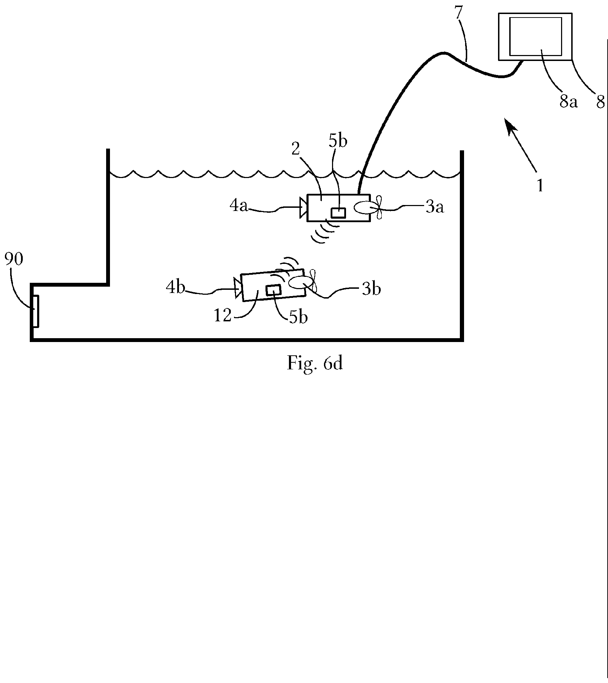

As depicted in Figure 6d, the second unmanned underwater vehicle 12 is driven to a second location where its second camera 4b can capture images of the structure 90 which is to be inspected. Commands for controlling the propellers 3b of the second unmanned underwater vehicle 12, may be sent via the tether 7 to the first unmanned underwater vehicle 2, and transmitted, in the form of an optical signal, by the optical transceiver 5a on the first unmanned underwater vehicle 2 to the optical transceivers 5b on the second unmanned underwater vehicle 12, where they are processed and subsequently executed by an onboard controller in second unmanned underwater vehicle 12. Said commands ensure that the propellers 3b operate to drive the second unmanned underwater vehicle 12 to the second location.

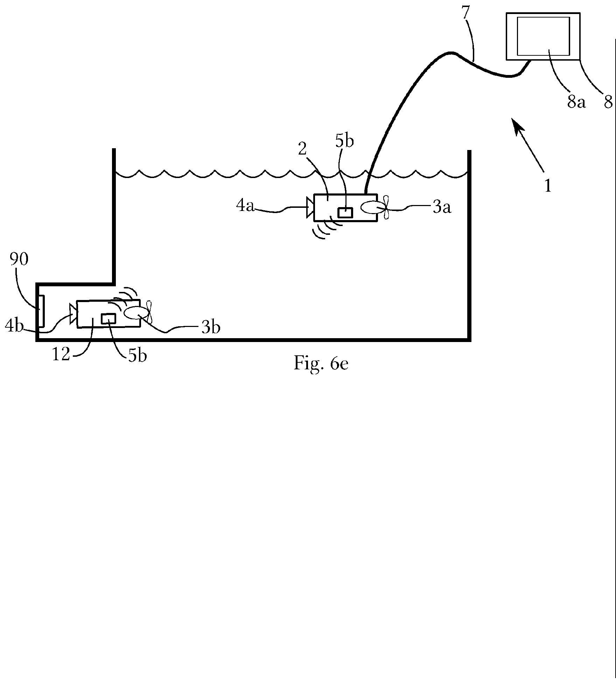

As depicted in Figure 6e, at the second location the second camera 4b on the second unmanned underwater vehicle 12 is operated to capture images of the structure 90 which is to be inspected. Image data captured by the second camera 14 on the second unmanned underwater vehicle 12, can be transmitted in an optical signal from the optical transceivers 5b on the second unmanned underwater vehicle 12 to the optical transceivers 5a on the first unmanned underwater vehicle 2. Upon receipt of the optical signal the image data may be transmitted, via the first communication line of the tether 7, to the terminal 8 where the image data is displayed on the display screen 8a.

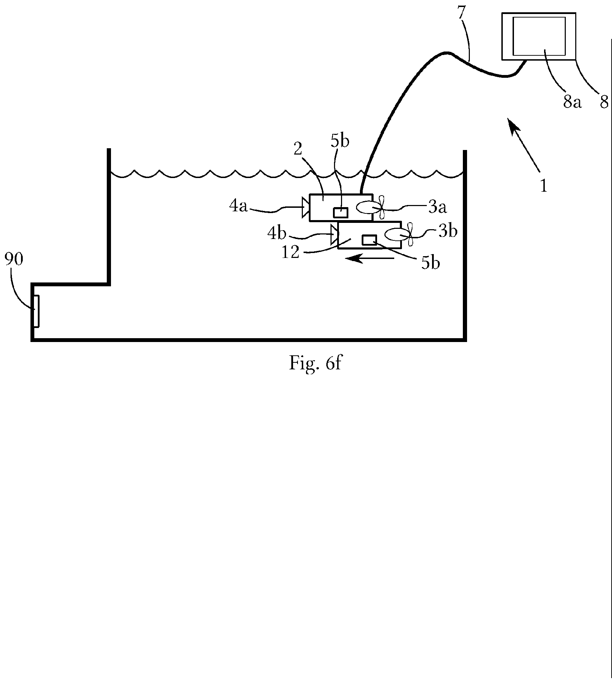

As depicted in Figure 6f, once the structure 90 has been inspected the second unmanned underwater vehicle 12 is driven back to the location of the first unmanned underwater vehicle 2. The propellers 3b of the second unmanned underwater vehicle 12 are operated to move the docking element 22, 122 to dock in the docking station 21,121, so that first unmanned underwater vehicle 2 and second unmanned underwater vehicle 12 are connected to one another (via the docking station 21 and docking means 22) thereby allowing first and second unmanned underwater vehicles to be once again handled as a single unit

As depicted in Figure 6f, the first and second unmanned underwater vehicles 2,12 may be driven back towards the surface of the water.

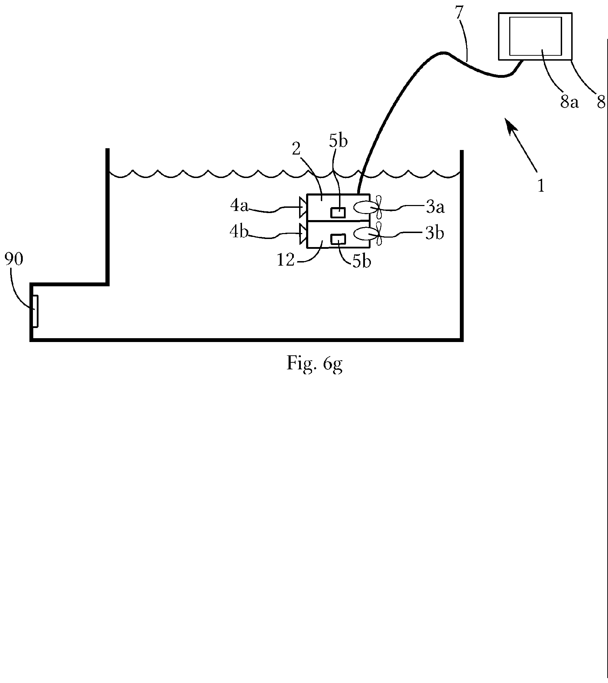

As depicted in Figure 6g, using the tether 7 the first and second unmanned underwater vehicles 2,12 are pulled as a single unit from the water.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. An underwater inspection assembly (1,100) comprising,
a first unmanned underwater vehicle (2) which comprises, at least a first propeller (3a), at least a first camera (4a), and at least a first optical transceiver (5a);
a tether (7), a first end (7a) of which is connected to the first unmanned underwater vehicle, and a second end (7b) of which is connected to a terminal (8) which can be positioned above water when the first unmanned underwater vehicle (2) is submerged; and wherein the tether (7) comprises a communication line to pass image data captured by the first camera to the terminal (8);
a docking station (21,121) which is attached to the first unmanned underwater vehicle (2), and wherein the docking station (21,121) is configured to receive docking means (22, 122) mounted on at least a second unmanned underwater vehicle (12);
at least a second unmanned underwater vehicle (12) comprising, at least a second propeller (3b) which can be operated independently of the first propeller (3a), at least a second camera (4b), and at least a second optical transceiver (5b), wherein said at least first and second optical transceivers (5a,5b) are configured to selectively optically communicate with one another; and
a docking means (22, 122) which is attached to the at least second unmanned underwater vehicle (12), wherein the docking means (22, 122) is configured so that it can be selectively docked in the docking station (21, 121);
wherein the second optical transceiver (5b) is configured to receive image data captured by the second camera (4b) and to transmit said received image data, in the form of an optical signal, to the first optical transceiver (5a); and wherein the first optical transceiver (5a) is configured to transmit said received image data, along the tether (7), to the terminal (8).

2. An assembly according to claim 1 wherein the docking station comprises a female element and the docking means comprises a male element which can selectively cooperate with the female element to dock the docking means in the docking station.

3. An assembly according to claim 1 or 2 wherein the docking means comprises a shaft member which is attached to the first unmanned underwater vehicle via a rack; and wherein the docking station comprises a channel which can receive at least a portion of the shaft member.

4. An assembly according to claim 3 wherein the docking station comprises a mouth portion which defines a receiving channel, and an end portion which has a pocket defined therein, and wherein the channel is a guide channel which extends from the mouth portion to the end portion, and wherein the receiving channel tapers towards the guide channel.

5. An assembly according to claim 1 or 2 wherein the docking station comprises first and second opposing side panels; wherein the first side panel has an inner surface which has a first channel defined therein, and the second side panel has an inner surface which has a second channel defined therein.

6. An assembly according to claim 5 wherein a first mouth portion is defined in the inner surface of the first side panel, wherein the first mouth potion comprises a channel which tapers from an edge of the first side panel towards the first channel; and wherein a second mouth portion is defined in the inner surface of the second side panel, wherein the second mouth potion comprises a channel which tapers from an edge of the second side panel towards the second channel.

7. An assembly according to claim 5 or 6 wherein the docking means comprises a first wing member and a second wing member, wherein the dimensions of the first wing member are such that the first wing member can slide along the first channel of the first side panel, and the dimensions of the second wing member are such that the second wing member can slide along the second channel of the second side panel.

8. An assembly according to any one of the preceding claims wherein the first unmanned underwater vehicle and the second unmanned underwater vehicle have the same design.

9. An assembly according to any one of the preceding claims wherein the tether is mechanically attached to the first unmanned underwater vehicle via an attachment means; and wherein the attachment means and tether are configured so that the tether can be used bear the combined weight of the first unmanned underwater vehicle, docking station, docking means, and at least a second unmanned underwater vehicle, so that the tether can be used to raise or lower the first unmanned underwater vehicle, docking station, docking means, and at least a second unmanned underwater vehicle from/into water.

10. An assembly according to any one of the preceding claims wherein the assembly comprises, a plurality of docking stations which are attached to the first unmanned underwater vehicle; and a plurality of unmanned underwater vehicles each having a respective docking means, wherein each docking means is configured so that it can be selectively docked in a respective docking station.

11. An assembly according to any one of the preceding claims wherein the assembly further comprises one or more visual markers; and
wherein second unmanned vehicle comprises at least one camera which is operably connected to a processor so that the processor can receive images of the visual markers captured by the camera; and
wherein the processor is configured to determine the position of the docking means relative to visual markers using the images received from the camera; and
wherein the processor is configured to compute, at regular intervals, a misalignment of the docking means relative to the docking station, using said determined position of the docking means relative to the visual markers captured; and
wherein the processor is further configured to sends commands to the propellers of the second unmanned underwater vehicle to move the second unmanned underwater vehicle to minimise the misalignment.

12. A method of inspecting a structure using the assembly according to any one of claims 1-11, the method comprising the steps of,
when the docking means (22,122) which is attached to the at least second unmanned underwater vehicle (12) is docked in the docking station (21,121) which is attached to the first unmanned underwater vehicle (2), using the tether (7) to lower the first unmanned underwater vehicle (2) and a second unmanned underwater vehicle (12) into water;
transmitting the signals along the tether (7) which control the movement of the first propeller (3a) so as to drive the first unmanned underwater vehicle (2) and second unmanned underwater vehicle (12) to a first location;
moving the second unmanned underwater vehicle (12) relative to the first unmanned underwater vehicle (2) to cause the docking means (22,122) to become undocked from the docking station (21,121);
moving the second unmanned underwater vehicle (12) to a second location where the second camera (4b) can capture images of the structure to be inspected;
capturing images using the first camera, and transmitting said images captured by the first camera over the tether to a terminal (8) to which the tether (7) is attached;
capturing images of the structure using the second camera (4b); transmitting said images captured by the second camera (4b) in the form of an optical signal from the second optical transceiver (5b) to the first optical transceiver (5a);
transmitting the image data received at the first transceiver along the tether (7) to the terminal (8).

13. A method according to claim 12 wherein the step of moving the second unmanned underwater vehicle to a second location comprises, transmitting the optical signals from the first transceiver to the second transceiver which control the movement of the second propeller so that the second unmanned underwater vehicle is moved to the second location.

## Patentansprüche

1. Unterwasserinspektionsanordnung (1, 100), umfassend:
ein erstes unbemanntes Unterwasserfahrzeug (2), das mindestens einen ersten Propeller (3a), mindestens eine erste Kamera (4a) und mindestens einen ersten optischen Sender-Empfänger (5a) umfasst;
ein Kabel (7), dessen erstes Ende (7a) mit dem ersten unbemannten Unterwasserfahrzeug verbunden ist und dessen zweites Ende (7b) mit einem Endgerät (8) verbunden ist, das über Wasser positioniert werden kann, wenn das erste unbemannte Unterwasserfahrzeug (2) untergetaucht ist; und wobei das Kabel (7) eine Kommunikationsleitung umfasst, um die von der ersten Kamera erfassten Bilddaten an das Endgerät (8) zu übertragen;
eine Andockstation (21, 121), die an dem ersten unbemannten Unterwasserfahrzeug (2) befestigt ist, und wobei die Andockstation (21, 121) so konfiguriert ist, dass sie Andockvorrichtungen (22, 122) aufnehmen kann, die an mindestens einem zweiten unbemannten Unterwasserfahrzeug (12) angebracht sind; mindestens ein zweites unbemanntes Unterwasserfahrzeug (12) mit mindestens einem zweiten Propeller (3b), der unabhängig vom ersten Propeller (3a) betätigt werden kann, mindestens eine zweite Kamera (4b) und mindestens einen zweiten optischen Sender-Empfänger (5b), wobei der mindestens eine erste und der mindestens eine zweite optische Sender-Empfänger (5a, 5b) so ausgelegt sind, dass sie selektiv optisch miteinander kommunizieren; und
eine Andockvorrichtung (22, 122), die zumindest an dem zweiten unbemannten Unterwasserfahrzeug (12) befestigt ist, wobei die Andockvorrichtung (22, 122) so konfiguriert ist, dass sie selektiv an der Andockstation (21, 121) andocken kann;
wobei der zweite optische Sender-Empfänger (5b) so konfiguriert ist, dass er von der zweiten Kamera (4b) aufgenommene Bilddaten empfängt und die empfangenen Bilddaten in Form eines optischen Signals an den ersten optischen Sender-Empfänger (5a) überträgt; und wobei der erste optische Sender-Empfänger (5a) so konfiguriert ist, dass er die empfangenen Bilddaten entlang des Kabels (7) an das Endgerät (8) überträgt.

2. Eine Anordnung nach Anspruch 1, wobei die Andockstation ein Aufnahmeteil umfasst und die Andockvorrichtung ein Steckteil umfasst, das selektiv mit dem Aufnahmeteil zusammenwirken kann, um die Andockvorrichtung in der Andockstation anzudocken.

3. Eine Anordnung nach Anspruch 1 oder 2, wobei die Andockvorrichtung ein Wellenelement umfasst, das über eine Zahnstange an dem ersten unbemannten Unterwasserfahrzeug befestigt ist; und wobei die Andockstation einen Kanal umfasst, der mindestens einen Teil des Wellenelements aufnehmen kann.

4. Eine Anordnung nach Anspruch 3, wobei die Andockstation einen Mündungsabschnitt umfasst, der einen Aufnahmekanal definiert, und einen Endabschnitt, der eine darin definierte Tasche aufweist, und wobei der Kanal ein Führungskanal ist, der sich vom Mündungsabschnitt zum Endabschnitt erstreckt, und wobei sich der Aufnahmekanal zum Führungskanal hin verjüngt.

5. Eine Anordnung nach Anspruch 1 oder 2, wobei die Andockstation eine erste und eine zweite gegenüberliegende Seitenwand umfasst; wobei die erste Seitenwand eine Innenfläche aufweist, in der ein erster Kanal definiert ist, und die zweite Seitenwand eine Innenfläche aufweist, in der ein zweiter Kanal definiert ist.

6. Eine Anordnung nach Anspruch 5, wobei in der Innenfläche der ersten Seitenwand ein erster Mündungsabschnitt definiert ist, wobei der erste Mündungsabschnitt einen Kanal umfasst, der sich von einer Kante der ersten Seitenwand zum ersten Kanal hin verjüngt; und wobei in der Innenfläche der zweiten Seitenwand ein zweiter Mündungsabschnitt definiert ist, wobei der zweite Mündungsabschnitt einen Kanal umfasst, der sich von einer Kante der zweiten Seitenwand zum zweiten Kanal hin verjüngt.

7. Eine Anordnung nach Anspruch 5 oder 6, wobei die Andockvorrichtung ein erstes Flügelelement und ein zweites Flügelelement umfasst, wobei die Abmessungen des ersten Flügelelements so beschaffen sind, dass das erste Flügelelement entlang des ersten Kanals der ersten Seitenwand gleiten kann, und die Abmessungen des zweiten Flügelelements so sind, dass das zweite Flügelelement entlang des zweiten Kanals der zweiten Seitenwand gleiten kann.

8. Eine Anordnung gemäß einem der vorstehenden Ansprüche, wobei das erste unbemannte Unterwasserfahrzeug und das zweite unbemannte Unterwasserfahrzeug die gleiche Bauart aufweisen.

9. Eine Anordnung gemäß einem der vorstehenden Ansprüche, wobei das Kabel über ein Befestigungsmittel mechanisch an dem ersten unbemannten Unterwasserfahrzeug befestigt ist; und wobei das Befestigungsmittel und das Kabel so konfiguriert sind, dass das Kabel dazu verwendet werden kann, das kombinierte Gewicht des ersten unbemannten Unterwasserfahrzeugs, der Andockstation, der Andockvorrichtung und mindestens eines zweiten unbemannten Unterwasserfahrzeugs zu tragen, so dass das Kabel dazu verwendet werden kann, das erste unbemannte Unterwasserfahrzeug, die Andockstation, die Andockvorrichtung und mindestens ein zweites unbemanntes Unterwasserfahrzeug aus dem Wasser zu heben oder ins Wasser abzusenken.

10. Eine Anordnung gemäß einem der vorstehenden Ansprüche, wobei die Anordnung eine Vielzahl von Andockstationen umfasst, die an dem ersten unbemannten Unterwasserfahrzeug befestigt sind; und eine Vielzahl von unbemannten Unterwasserfahrzeugen, die jeweils eine entsprechende Andockvorrichtung aufweisen, wobei jede Andockvorrichtung so konfiguriert ist, dass sie selektiv an einer entsprechenden Andockstation andocken kann.

11. Eine Anordnung gemäß einem der vorstehenden Ansprüche, wobei die Anordnung ferner einen oder mehrere visuelle Markierungen umfasst; und
wobei das zweite unbemannte Fahrzeug mindestens eine Kamera, die funktionsfähig mit einem Prozessor verbunden ist, so dass der Prozessor von der Kamera aufgenommene Bilder der visuellen Markierungen empfangen kann; und
wobei der Prozessor so konfiguriert ist, die Position der Andockvorrichtung relativ zu den visuellen Markierungen anhand der von der Kamera empfangenen Bilder zu bestimmen; und
wobei der Prozessor so konfiguriert ist, in regelmäßigen Abständen eine Fehlausrichtung der Andockvorrichtung relativ zur Andockstation zu berechnen, wobei er die ermittelte Position der Andockvorrichtung relativ zu den erfassten visuellen Markierungen verwendet; und
wobei der Prozessor ferner so konfiguriert ist, dass er Befehle an die Propeller des zweiten unbemannten Unterwasserfahrzeugs sendet, um das zweite unbemannte Unterwasserfahrzeug zu bewegen und so die Fehlausrichtung zu minimieren.

12. Verfahren zur Inspektion einer Struktur unter Verwendung der Anordnung gemäß einem der Ansprüche 1 bis 11, wobei das Verfahren die folgenden Schritte umfasst:
wenn die Andockvorrichtung (22, 122), die an mindestens dem zweiten unbemannten Unterwasserfahrzeug (12) befestigt ist, in der Andockstation (21, 121), die am ersten unbemannten Unterwasserfahrzeug (2) befestigt ist, verankert ist, Verwenden des Kabels (7), um das erste unbemannte Unterwasserfahrzeug (2) und ein zweites unbemanntes Unterwasserfahrzeug (12) ins Wasser abzusenken;
Übertragen von Signalen entlang des Kabels (7), die die Bewegung des ersten Propellers (3a) steuern, um das erste unbemannte Unterwasserfahrzeug (2) und das zweite unbemannte Unterwasserfahrzeug (12) zu einem ersten Standort zu bewegen;
Bewegen des zweiten unbemannten Unterwasserfahrzeugs (12) relativ zum ersten unbemannten Unterwasserfahrzeug (2), um ein Lösen der Andockvorrichtung (22, 122) von der Andockstation (21, 121) zu bewirken;
Bewegen des zweiten unbemannten Unterwasserfahrzeugs (12) zu einem zweiten Standort, an dem die zweite Kamera (4b) Bilder der zu inspizierenden Struktur aufnehmen kann;
Aufnehmen von Bildern mit der ersten Kamera und Übertragen der von der ersten Kamera aufgenommenen Bilder über das Kabel an ein Endgerät (8), mit dem das Kabel (7) verbunden ist;
Aufnehmen von Bildern der Struktur mit Hilfe der zweiten Kamera (4b);
Übertragen der von der zweiten Kamera (4b) aufgenommenen Bilder in Form eines optischen Signals vom zweiten optischen Sende-Empfänger (5b) zum ersten optischen Sende-Empfänger (5a);
Übertragen der am ersten Sende-Empfänger empfangenen Bilddaten entlang des Kabels (7) an das Endgerät (8).

13. Verfahren nach Anspruch 12, wobei der Schritt des Bewegens des zweiten unbemannten Unterwasserfahrzeugs zu einem zweiten Ort die Übertragung der optischen Signale vom ersten Sende-Empfänger zum zweiten Sende-Empfänger umfasst, welcher die Bewegung des zweiten Propellers so steuert, dass das zweite unbemannte Unterwasserfahrzeug zum zweiten Ort bewegt wird.

## Revendications

1. Un ensemble d'inspection sous-marine (1, 100) comprenant :
un premier véhicule sous-marin sans pilote (2) qui comprend au moins une première hélice (3a), au moins une première caméra (4a) et au moins un premier émetteur-récepteur optique (5a) ;
un câble (7) dont une première extrémité (7a) est reliée au premier véhicule sous-marin sans pilote et dont une seconde extrémité (7b) est reliée à un terminal (8) qui peut être positionné au-dessus de l'eau lorsque le premier véhicule sous-marin sans pilote (2) est immergé; et dans lequel le câble (7) comprend une ligne de communication pour transmettre les données d'image capturées par la première caméra au terminal (8) ;
une station d'amarrage (21, 121) qui est fixée au premier véhicule sous-marin sans pilote (2), et dans lequel la station d'amarrage (21, 121) est configurée pour recevoir des moyens d'amarrage (22, 122) montés sur au moins un deuxième véhicule sous-marin sans pilote (12) ;
au moins un deuxième véhicule sous-marin sans pilote (12) comprenant au moins une deuxième hélice (3b) qui peut être actionnée indépendamment de la première hélice (3a), au moins une deuxième caméra (4b), et au moins un deuxième émetteur-récepteur optique (5b), dans lequel lesdits au moins premier et deuxième émetteurs-récepteurs optiques (5a, 5b) sont configurés pour communiquer optiquement de manière sélective l'un avec l'autre ; et
un moyen d'amarrage (22, 122) qui est fixé au moins au deuxième véhicule sous-marin sans pilote (12), dans lequel le moyen d'amarrage (22, 122) est configuré de manière à pouvoir être amarré de manière sélective dans la station d'amarrage (21, 121);
dans lequel le deuxième émetteur-récepteur optique (5b) est configuré pour recevoir des données d'image capturées par la deuxième caméra (4b) et pour transmettre lesdites données d'image reçues, sous la forme d'un signal optique, au premier émetteur-récepteur optique (5a) ; et dans lequel le premier émetteur-récepteur optique (5a) est configuré pour transmettre lesdites données d'image reçues, le long du câble (7), au terminal (8).

2. Un ensemble selon la revendication 1, dans lequel la station d'amarrage comprend un élément femelle et le moyen d'amarrage comprend un élément mâle qui peut coopérer de manière sélective avec l'élément femelle pour amarrer le moyen d'amarrage dans la station d'amarrage.

3. Un ensemble selon la revendication 1 ou 2, dans lequel le moyen d'amarrage comprend un élément d'arbre qui est fixé au premier véhicule sous-marin sans pilote via un rack; et dans lequel la station d'amarrage comprend un canal qui peut recevoir au moins une partie de l'élément d'arbre.

4. Un ensemble selon la revendication 3, dans lequel la station d'amarrage comprend une partie d'embouchure qui définit un canal de réception, et une partie d'extrémité qui comporte une poche définie à l'intérieur, et dans lequel le canal est un canal de guidage qui s'étend de la partie d'embouchure à la partie d'extrémité, et dans lequel le canal de réception se rétrécit vers le canal de guidage.

5. Un ensemble selon la revendication 1 ou 2, dans lequel la station d'amarrage comprend des premier et deuxième panneaux latéraux opposés; dans lequel le premier panneau latéral comporte une surface intérieure dans laquelle est défini un premier canal, et le deuxième panneau latéral comporte une surface intérieure dans laquelle est défini un deuxième canal.

6. Un ensemble selon la revendication 5, dans lequel une première partie d'embouchure est définie dans la surface intérieure du premier panneau latéral, dans lequel la première partie d'embouchure comprend un canal qui s'effile depuis un bord du premier panneau latéral vers le premier canal ; et dans lequel une deuxième partie d'embouchure est définie dans la surface intérieure du deuxième panneau latéral, dans lequel la deuxième partie d'embouchure comprend un canal qui s'effile depuis un bord du deuxième panneau latéral vers le deuxième canal.

7. Un ensemble selon la revendication 5 ou 6, dans lequel le moyen d'amarrage comprend un premier élément d'aile et un deuxième élément d'aile, dans lequel les dimensions du premier élément d'aile sont telles que le premier élément d'aile peut coulisser le long du premier canal du premier panneau latéral, et les dimensions du deuxième élément d'aile sont telles que le deuxième élément d'aile peut coulisser le long du deuxième canal du deuxième panneau latéral.

8. Un ensemble selon l'une quelconque des revendications précédentes, dans lequel le premier véhicule sous-marin sans pilote et le deuxième véhicule sous-marin sans pilote ont le même design.

9. Un ensemble selon l'une quelconque des revendications précédentes, dans lequel le câble est fixé mécaniquement au premier véhicule sous-marin sans pilote via un moyen de fixation ; et dans lequel le moyen de fixation et le câble sont configurés de telle sorte que le câble peut être utilisé pour supporter le poids combiné du premier véhicule sous-marin sans pilote, de la station d'amarrage, du moyen d'amarrage et d'au moins un deuxième véhicule sous-marin sans pilote, de sorte que le câble peut être utilisé pour soulever ou abaisser le premier véhicule sous-marin sans pilote, la station d'amarrage, le moyen d'amarrage et au moins un deuxième véhicule sous-marin sans pilote hors de l'eau ou dans l'eau.

10. Un ensemble selon l'une quelconque des revendications précédentes, dans lequel l'ensemble comprend une pluralité de stations d'amarrage qui sont fixées au premier véhicule sous-marin sans pilote ; et une pluralité de véhicules sous-marins sans pilote ayant chacun un moyen d'amarrage respectif, dans lequel chaque moyen d'amarrage est configuré de manière à pouvoir être amarré de manière sélective dans une station d'amarrage respective.

11. Un ensemble selon l'une quelconque des revendications précédentes, dans lequel l'ensemble comprend en outre un ou plusieurs marqueurs visuels ; et
dans lequel le deuxième véhicule sans pilote comprend au moins une caméra qui est connectée de manière opérationnelle à un processeur afin que le processeur puisse recevoir des images des marqueurs visuels capturées par la caméra ; et
dans lequel le processeur est configuré pour déterminer la position du moyen d'amarrage par rapport aux marqueurs visuels à l'aide des images reçues de la caméra ; et
dans lequel le processeur est configuré pour calculer, à intervalles réguliers, un désalignement du moyen d'amarrage par rapport à la station d'amarrage, en utilisant ladite position déterminée du moyen d'amarrage par rapport aux marqueurs visuels capturés; et
dans lequel le processeur est en outre configuré pour envoyer des commandes aux hélices du deuxième véhicule sous-marin sans pilote, afin de déplacer le deuxième véhicule sous-marin sans pilote, pour minimiser le désalignement.

12. Un procédé d'inspection d'une structure à l'aide de l'ensemble selon l'une quelconque des revendications 1 à 11, le procédé comprenant les étapes suivantes :
lorsque le moyen d'amarrage (22, 122) qui est fixé à au moins le deuxième véhicule sous-marin sans pilote (12) est amarré dans la station d'amarrage (21, 121) qui est fixée au premier véhicule sous-marin sans pilote (2), utiliser le câble (7) pour descendre le premier véhicule sous-marin sans pilote (2) et un deuxième véhicule sous-marin sans pilote (12) dans l'eau ;
transmettre les signaux le long du câble (7) qui commandent le mouvement de la première hélice (3a), afin d'entraîner le premier véhicule sous-marin sans pilote (2) et le deuxième véhicule sous-marin sans pilote (12) vers un premier emplacement ;
déplacer le deuxième véhicule sous-marin sans pilote (12) par rapport au premier véhicule sous-marin sans pilote (2) pour provoquer le désamarrage des moyens d'amarrage (22, 122) de la station d'amarrage (21, 121);
déplacer le deuxième véhicule sous-marin sans pilote (12) vers un deuxième emplacement où la deuxième caméra (4b) peut capturer des images de la structure à inspecter;
capturer des images à l'aide de la première caméra et transmettre lesdites images capturées par la première caméra via le câble à un terminal (8) auquel le câble (7) est relié;
capturer des images de la structure à l'aide de la deuxième caméra (4b) ;
transmettre lesdites images capturées par la deuxième caméra (4b) sous la forme d'un signal optique depuis le deuxième émetteur-récepteur optique (5b) vers le premier émetteur-récepteur optique (5a) ;
transmettre les données d'image reçues au premier émetteur-récepteur le long du câble (7) vers le terminal (8).

13. Un procédé selon la revendication 12, dans lequel l'étape consistant à déplacer le deuxième véhicule sous-marin sans pilote vers un deuxième emplacement comprend la transmission des signaux optiques du premier émetteur-récepteur vers le deuxième émetteur-récepteur qui contrôle le mouvement de la deuxième hélice de sorte que le deuxième véhicule sous-marin sans pilote soit déplacé vers le deuxième emplacement.
